Europäisches Patentamt

European Patent Office

Office européen des brevets

(11) Publication number: **0 155 112**
A1

## EUROPEAN PATENT APPLICATION

(21) Application number: **85301296.1**

(22) Date of filing: **26.02.85**

(51) Int. Cl.⁴: **F 16 H 37/08**

(30) Priority: **27.02.84 GB 8405034**

(43) Date of publication of application: **18.09.85**
Bulletin 85/38

(84) Designated Contracting States: **BE DE FR GB IT SE**

(71) Applicant: **NATIONAL RESEARCH DEVELOPMENT CORPORATION, 101 Newington Causeway, London SE1 6BU (GB)**

(72) Inventor: **Fellows, Thomas George, 1 Greenbrook Avenue Hadley Wood, Barnet Hertfordshire EN4 0LS (GB)**
Inventor: **Soar, Geoffrey Bernard, 31 Lingfield Drive Worth, Crawley West Sussex RH10 4XQ (GB)**

(74) Representative: **Stables, Patrick Antony, Patent Department National Research Development Corporation 101 Newington Causeway, London SE1 6BU (GB)**

(54) **Improvements in or relating to drive systems for automobile vehicles.**

㊐ A drive system for an automobile vehicle with a continuously-variable-ration transmission unit, particularly of the toroidal race rolling traction type, in which the main axis (33a) of the transmission unit and the axis (8a) of the output shaft (8) of the prime mover (5) intersect substantially at right angles. The transmission unit may include two components — the ratio-varying unit (6), and an epicyclic train (7) — located in succession along the transmission axis, and the intersection of the two axes may occur between the two components. Clutches (25, 28) can be applied alternatively to two different elements of the epicyclic train, to permit the transmission to work in two different «regimes», so enhancing the output range of the drive system as a whole. In both such regimes the prime mover is directly connected to the ratio-varying unit and in one of them to the final transmission output by way of the sun (22) of the epicyclic. In the other regime the prime mover also directly drives the planet carrier (30) of the epicyclic, and the resultant final output is taken from the annulus (31).

0155112

126759

IMPROVEMENTS IN OR RELATING TO DRIVE SYSTEMS FOR

AUTOMOBILE VEHICLES

This invention relates to drive systems for automobile vehicles, comprising an engine or other prime mover connected to at least one driven axle by a continuously-variable-ratio transmission unit. It applies particularly to systems in which the ratio-varying part - which will be referred to as the variator - of the transmission unit is of the toroidal race rolling traction type and comprises at least one input disc which is rotatable about an axis lying perpendicular to one face and which has a coaxial toroidal race formed on that face. The output of the variator includes at least one coaxial disc formed with a similar and confronting toroidal race, the surfaces of two confronting races - input and output - together forming part of the surface of a single imaginary torus. Traction is transmitted from input to output discs across the torus by means of sets of rollers, each of which contacts both races and is mounted to rotate with its diameter substantially tangential to the torus centre circle and with its axis of rotation intersecting the common axis of the input and output discs presenting the confronting races. By altering the setting of the rollers so that their diameters remain tangential to the torus centre circle but so that the axis of rotation of each roller swings so as to intersect the common axis of the discs at a different point, the ratio between the speeds of the input and output discs, and thus the ratio transmitted by the variator and the transmission unit as a whole is changed smoothly. Such variators and transmission units are now well known in the art, and examples of both are described in detail in many published patents, for example UK Patent No. 1078791.

In rear wheel drive vehicles using transmission units of this type, the engine has often been located at the front of the vehicle with its crankshaft axis aligned with the fore-and-aft centreline of the vehicle, with the transmission unit directly astern of it and "in line" so that the variator is coaxial with the crankshaft,

0155112

- 2 -

and with the output of the transmission unit connected by a customary propellor shaft to a differential unit connected in its turn to the axles of the driven rear wheels. The total axial length of the engine and transmission unit when so mounted has been no problem because the space available along the centreline of the vehicle, in the engine compartment and within the conventional "tunnel" behind it, has been sufficient. The increasing popularity of front wheel drive vehicles with transverse engines has presented problems, however. The total axial length of a typical engine and a toroidal race unit, mounted in line, may exceed the transverse space available in some vehicles. Proposals to solve this problem have included designs in which the axes of rotation of the engine crankshaft and variator both lie transverse relative to the vehicle but the transmission unit lies alongside the engine, either immediately forward or astern of it. The output of the engine has been connected to the input of the transmission by means of gears or chains, layshafts and the like and the output of the transmission unit has been connected, either directly or by way of similar mechanisms, with the driven front axles. Such designs, while transversely compact, have the obvious disadvantages of many extra components and of the higher cost, transmission losses etc. that go with them.

The present invention concerns a new arrangement of prime mover and transmission unit which results in a total dimension of the arrangement - measured in a direction parallel to the axis of the prime mover - sufficiently small to be accommodated within the transverse space available in many vehicles. According to the invention a drive system for an automobile vehicle comprises a prime mover having an output shaft, a driven axle, and a rotary and continuously variable-ratio transmission unit also presenting an output shaft and connecting the prime mover to the axle, in which the axes of rotation of the output shafts of the prime mover and of the transmission unit lie substantially at right angles to each other. The axes of rotation of the unit and of the driven axle may typically lie either parallel or at right angles to each other, but may lie at other angles, e.g. obliquely.

A first or ratio-varying component - the "variator" - of the transmission unit may be of the toroidal race rolling traction type.

The connection between the output shaft of the prime mover and the input to the transmission unit may be by way of gearing incorporating a change of angle, for instance worm or bevel gearing.

The transmision unit may include a second component comprising a plurality of gears capable of being operated in at least two functionally-different combinations, and there may be two different connections between the output shaft of the prime mover and the transmission unit, one of these connections being with the variator and operable at all times while the other is directly with the second component and is disengageable, being operable in only one of the two different combinations.

The second component may include an epicyclic train and the connection between the output shaft of the prime mover and the second component may be with the planet carrier of that train and so arranged that when it is operable it rotates the carrier in the same direction as the sun which may be connected permanently to the output of the variator. The driven axle may be connected to the annulus of the epicyclic train.

The axes of rotation of the prime mover and of the transmission may meet between the first and second components of the transmission.

The invention is also defined by the claims and will now be described, by way of example, with reference to the accompanying drawings in which:-

Figure 1 is a diagrammatic section on the line I-I in Figure 2, with the engine shown in elevation,

Figure 2 is an outline side elevation of one drive system, and

Figure 3 is an outline side elevation of another system.

All the figures show drive systems for automobile vehicles in which the front axles and wheels are driven by prime movers mounted in the front of the vehicle, but the invention applies also to

- 4 -

vehicles in which the rear axles are driven by rear-mounted engines, or indeed in which the axles at one end of the vehicle are driven by a prime mover mounted at the other.

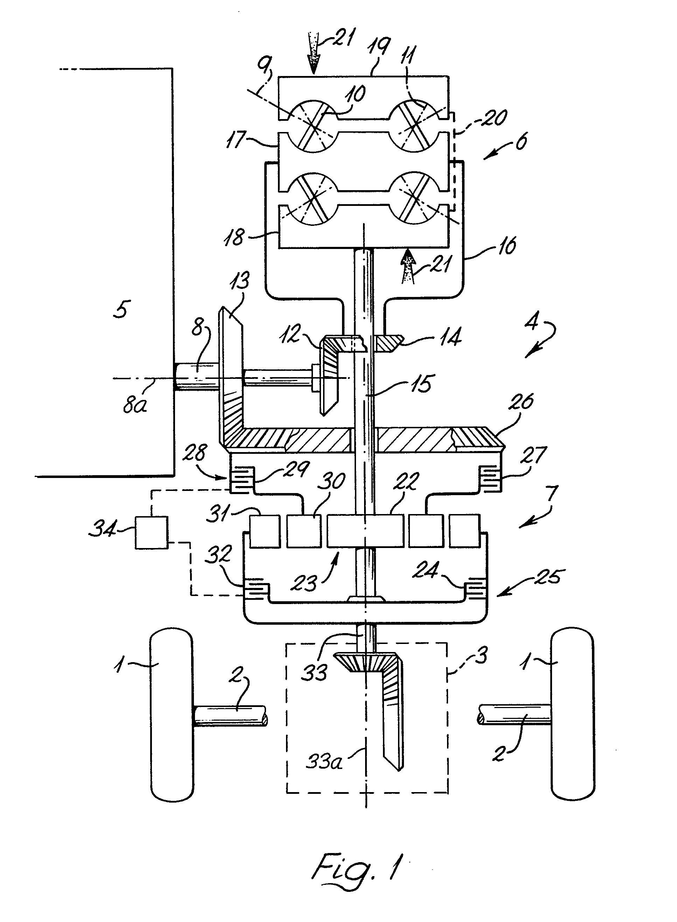

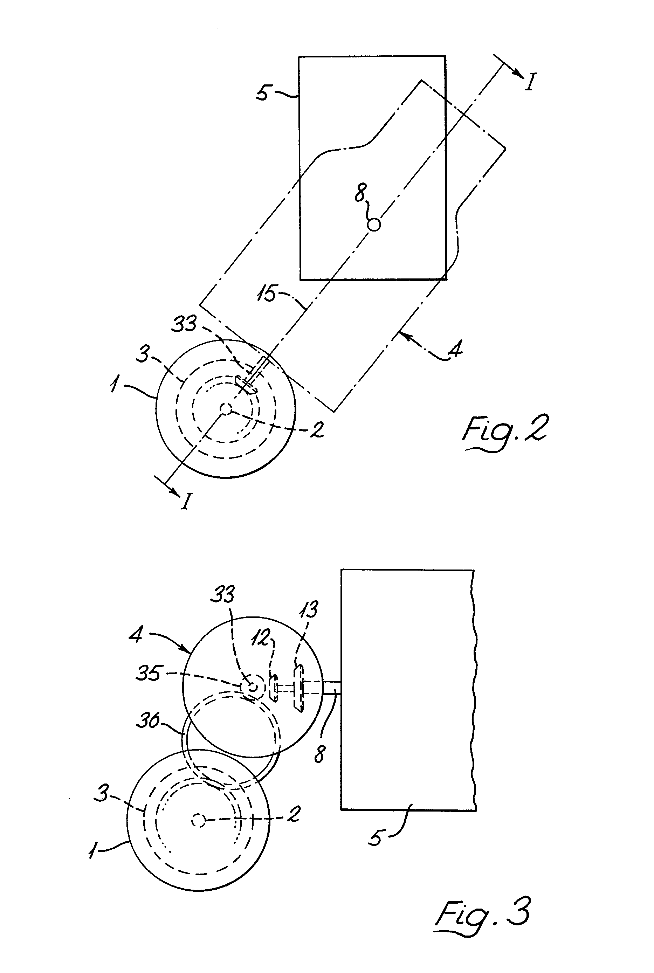

Figures 1 and 2 show a drive system in which front wheels 1 are mounted on axles 2 and driven, by way of a differential gear box indicated in outline at 3 and a transmission unit indicated generally at 4, by an engine or other prime mover 5. Unit 4 comprises a toroidal race rolling-friction type variator 6 and a gear train 7. While the details of unit 4 are different from those of the corresponding combination of variator and gear train shown in UK Patent No. 1078791, the essential operation of the unit is similar in that the gears of train 7 are capable of being arranged in two different combinations so that the unit as a whole can work in two different and distinct "regimes". Assuming constant speed input from engine 5 (the principal axis of rotation of which is indicated at 8a) by way of its output shaft 8, then if unit 4 is operating in its first regime and the axes 9 of rollers 10 are set in one extreme position as shown in full lines in Figure 1, wheels 1 will be rotating at maximum reverse speed. If now the axes 9 are swung - by mechanism well known in the art but not shown - so that the rollers move to their opposite extreme positions as indicated in broken lines at 11, this swinging movement of the roller axes is accompanied by a continuous change in the behaviour of the wheels 1. As the movement of the axes proceeds, the reverse speed of the wheels first diminishes to a point at which the wheels are stationary, and then as the rollers approach extreme 11 the wheels begin to rotate in the forward direction with increasing speed. The gears within train 7 are so arranged by known logic so that once the rollers reach extreme position 11, if the gear combination is changed so as to bring in the second regime in place of the first, instantaneous forward speed of wheels 1 for a given output from engine 5 does not alter. Such a change from one regime to another is known in the art as a synchronous change. If then the roller axes 9 are swung so that the rollers move back to their original and opposite extreme position as shown in full lines, the forward speed of wheels 1 increases steadily to the maximum.

Shaft 8 carries two bevel gears 12 and 13. Gear 12 meshes with another bevel gear 14 through which a shaft 15 passes with clearance. Bevel 14 is connected by a bell-shaped structure 16 to the input member 17 of variator 6 which has two, oppositely-facing output members 18 and 19 connected in known fashion indicated diagrammatically at 20. Having a connected pair of such output members facilitates the application of end loads (indicated diagrammatically by arrows 21) whereby traction is transmitted from the input member 17 to members 18 and 19 by way of rollers 10.

Shaft 15 is fixed to output members 18 and 19 and also to the sun 22 of an epicyclic train 23 and to the inner component 24 of a rotary clutch 25. A bevel gear 26 meshes with bevel 13, is mounted coaxially with shaft 15 but with clearance about it, and is connected to the outer component 27 of a clutch 28 the inner component 29 of which is connected to the planet carrier 30 of epicyclic 23. The annulus 31 of that epicyclic is connected to the outer component 32 of clutch 25, which is in turn connected to the output shaft 33 of unit 4 (the axis of rotation of which is indicated at 33a) and so, by way of differential 3, to the axles 2 and wheels 1. Clutches 25 and 28 are connected to mechanism 34 which operates, in a manner not shown but well understood in the art, automatically in response both to the operating state of the vehicle and to demand by the driver. When unit 4 is operating in the second of the "regimes" already described, in which swing of the axes 9 to move the rollers of variator 6 in the direction 11 to 10 results in steady increase in the forward speed of wheels 1, mechanism 34 causes clutch 25 to be engaged but clutch 28 to be disengaged. Bevel 26 therefore rotates freely and drive is transmitted to the wheels 1 from engine 5 by way of bevels 12 and 14, bell 16, input member 17, rollers 10, output members 18 and 19, shaft 15, the locked components of clutch 25, shaft 33, differential 3 and axles 2. In this regime the sun 22, planet carrier 30 and annulus 31 of epicyclic 23 rotate as one. In the other, first, regime, in which swing of the roller axes in the reverse direction can be used to cause the full range of reverse drive of the wheels and the beginning of forward drive, mechanism 34 operates to engage clutch 28 but disengages clutch 25. The three components of epicyclic 23 now rotate at different but related speeds, and the motion of wheels 1 reflects the rotation of annulus 31 to which they are connected by shaft 33, clutch 25 now being open.

The arrangment of bevels 12 and 14, 13 and 26 offers the particular advantage that the planet carrier 30, when connected to bevel 26 in the first regime by locked clutch 28, rotates in the same direction as shaft 15. This is necessary in order for the smooth progression from maximum reverse to slow forward drive to be encompassed within that first regime. If by way of example bevels 12 and 14 are in 1:1 ratio and bevels 13 and 26 are in 1:2 ratio, if the ratio of variator 6 is 2:1 when the rollers are in the broken-line positions 11, and if the ratio E of epicylic 23 equals 2, then this combination of parameters is one of those that enable a change from first to second regime when the rollers are in positions 11 to be a synchronous change, as already described.

Expressing the dimensions (axial and transverse) of engine 5 and transmission unit 4 by reference to the axes of shaft 8 and 33 (or 15) respectively, it is apparent from Figure 1 that the transverse dimension of unit 4 is much shorter than the corresponding axial dimension. The sum of the axial dimension of engine 5 and the transverse dimension of unit 4 is relatively small, and in particular is small enough to be accommodated within the transverse dimension of the engine compartments of many vehicles, whereas the sum of the axial dimensions of engine 5 and unit 4 is larger and could be more difficult to accommodate. Therefore by arranging engine 5 in the manner according to the invention shown in Figure 1, in which the axes of shafts 8 and 33 are substantially at right angles to each other and intersect between variator 6 and train 7, both components can be accommodated within the transverse space of many vehicles where a similar but in line arrangement of them might not have been accommodated. Another

- 7 -

advantage of the arrangement illustrated is that variator 6 is located high, and easily accessible, within the engine compartment.

Figure 3 shows an alternative arrangement according to the invention, which again offers potential advantages where transverse space within the engine compartment is limited. Whereas the engine 5 of Figures 1 and 2 would typically be mounted forward of the axles 2, in Figure 3 it is mounted to the rear of them and with its output shaft 8 parallel to the length of the vehicle. As before the axes of shafts 8 and 15 are mutually at right angles so that shaft 15 now lies parallel to the axles 2, allowing shaft 33 to be connected to differential 3 by means of a spur gears 35 and 36.

While the invention has been described with reference to examples in which the output shaft of the prime mover for a vehicle is horizontal, that need not always be the case. The invention can apply to drive systems in which the axis of that shaft lies at any orientation, and the axis of the transmission unit substantially at right angles to it.

83L

CLAIMS

1. A drive system for an automobile vehicle comprising a prime mover (5) having an output shaft (6), a driven axle (2), and a rotary and continuously variable-ratio transmission unit (4) presenting an output shaft (33) and connecting the prime mover to the axle, characterised in that the axes of rotation of the output shafts of the prime mover and of the transmission unit (8a, 33a) lie substantially at right angles to each other.

2. A drive system according to Claim 1 characterised in that the driven axle (2) and the transmission unit output shaft (33, Figure 3) are parallel.

3. A drive system according to Claim 1 characterised in that the driven axle (2) and the transmission unit output shaft (33, Figures 1 and 2) lie at right angles to each other.

4. A drive system according to Claim 1 in characterised in that the driven axle and the transmission unit output shaft lie at an oblique angle to each other.

5. A drive system according to Claim 1 characterised in that the transmission unit (4) includes a first, ratio-varying component (6), and a second component (7) comprising a plurality of gears capable of being operated in at least two functionally-different combinations.

6. A drive system according to Claim 5 characterised in that the axes of rotation of the output shafts of the prime mover and of the transmission unit meet at a point lying between the first and second components of the transmission.

7. A drive system according to Claim 5 characterised in that the first ratio-varying component is of the toroidal race rolling traction type.

8. A drive system according to Claim 1 characterised in that connection between the output shaft (8) of the prime mover (5) and the input to the transmission unit is by way of gearing incorporating a change of angle, for instance worm or bevel (12, 14: 13, 26) gearing.

9. A drive system according to Claim 5 characterised in that two different connections between the output shaft (8) of the prime mover and the transmission unit are possible, one of these connections (via 12, 14, 16) being with the ratio-varying component (6) and operable at all times while the other (via 13, 26, 27) is directly with the second component (7) and is disengageable (by 27), being operable in only one of the two different combinations.

10. A drive system according to Claim 9 characterised in that the second component (7) includes an epicyclic train, in which the disengageable connection between the output shaft (8) of the prime mover and the second component (7) is with the planet carrier (30) of that train and so arranged that when it is operable it rotates the planet carrier in the same direction as the sun (22) which is connected permanently to the output (15) of the ratio-varying first component (6).

11. A drive system according to Claim 10 characterised in that the driven axle (2) is connected to the annulus (31) of the epicyclic train.

83M

Fig. 1

*Fig. 2*

*Fig. 3*

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-E- 8 895 (SAUSSARD)  <br> * Pages 1,2; figures * | 1,2,5-8,10,11 | F 16 H 37/08 |
| A | EP-A-0 078 124 (LEYLAND)  <br> * Pages 4-6; figures * | 1,2,5-7,9-11 | |
| A | EP-A-0 043 184 (BL TECHNOLOGY)  <br> * Pages 3,4; figures * | 1,5,7 9 | |
| D,A | GB-A-1 078 791 (NATIONAL RESEARCH) | | |
| | ----- | | **TECHNICAL FIELDS SEARCHED (Int. Cl.4)** <br><br> F 16 H 37/00 |

The present search report has been drawn up for all claims

| Place of search <br> THE HAGUE | Date of completion of the search <br> 20-05-1985 | Examiner <br> FLORES E. |
|---|---|---|